# EUROPEAN PATENT APPLICATION

(11) **EP 4 620 558 A1**
(43) Date of publication of application: **24.09.2025**
(21) Application number: 23891153.1
(22) Date of filing: 15.09.2023
(51) Int. Cl.: B01D 61/12, C02F 1/44

(54) **PURE WATER PRODUCTION APPARATUS**

(30) Priority: 14.11.2022 JP 2022182175
(71) Applicant: Kurita Water Industries Ltd., Tokyo 164-0001 (JP)
(72) Inventor: MINATO, Yasuharu, Tokyo 164-0001 (JP)
(74) Representative: TBK
(86) International application number: PCT/JP2023/033721
(87) International publication number: WO 2024/105995

(57) **Abstract**

Provided is a pure water production apparatus 3, wherein a reverse-osmosis membrane system 12 is configured so that three reverse-osmosis membranes 12A, 12B, 12C are positioned in parallel, and a water-supply pump 11A is configured to be controllable by a control means so as to supply pre-treatment water WO in an amount that corresponds to a requested amount of treated water W5 in the pure water production apparatus 3. A flow meter 32 is provided to a stage preceding the water-supply pump 11A. The number of instances of flushing of the reverse-osmosis membranes 12A, 12B, 12C can be controlled by the control means on the basis of a detection value from the flow meter 32. According to this pure water production apparatus, it is possible to stabilize water quality even when the flow rate fluctuates in a manner that follows the amount of water used or other factors, and to conserve energy.

## Description

### Technical Field

The present invention relates to a pure water production device including a reverse osmosis membrane system, and particularly to a pure water production device including a reverse osmosis membrane system capable of varying flow rate in response to factors such as the amount of water used.

### Related Art

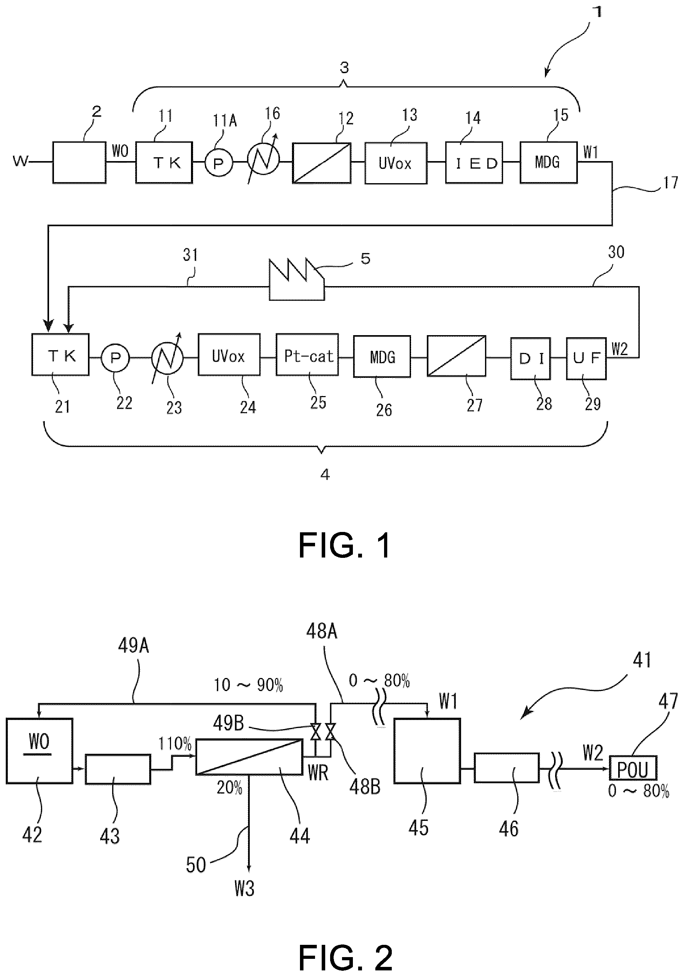

Conventionally, ultrapure water used in electronic industries such as semiconductors is, for example, produced by treating raw water in an ultrapure water production device 1 composed of three stages of devices, namely a pre-treatment device 2, a primary pure water device 3, and a secondary pure water device (subsystem) 4, as shown in FIG. 1. Specifically, in the pre-treatment device 2, pre-treatment is applied to the raw water W by filtration, coagulation sedimentation, precision filtration membrane, etc., and suspended substances are mainly removed.

The primary pure water device 3 includes, for example, a tank 11 for pre-treatment water WO, a water supply pump 11A, a reverse osmosis membrane system 12, an ultraviolet (UV) oxidation device 13, a regenerative ion exchange device (mixed bed type or 4-bed 5-tower type, etc.) 14, and a membrane degassing device 15. It is noted that 16 is a preheater. Here, most of the electrolytes, fine particles, and live bacteria in the pre-treatment water WO are removed, and organic substances are decomposed.

The subsystem 4 includes, for example, a subtank 21 for storing the primary pure water W1 produced by the aforementioned primary pure water device 3, a water supply pump 22 for feeding the primary pure water W1 stored in this subtank 21, an ultraviolet oxidation device 24 for treating this primary pure water W1, a platinum group metal catalyst resin tower 25, a membrane degassing device 26, a reverse osmosis membrane system 27, a non-regenerative mixed bed ion exchange device 28, and an ultrafiltration (UF) membrane 29 as a membrane filtration device. It is noted that 23 is a heat exchanger. In this subsystem 4, the ultraviolet oxidation device 24 oxidizes and decomposes trace amounts of organic substances (TOC components) contained in the primary pure water W1 by ultraviolet rays, the hydrogen peroxide generated by this ultraviolet irradiation is decomposed in the platinum group metal catalyst resin tower 25, and then dissolved gases such as DO (dissolved oxygen) that have been mixed in are removed by the downstream membrane degassing device 26. Subsequently, by treating through the reverse osmosis membrane system 27 and the non-regenerative ion exchange device 28, residual carbonate ions, organic acids, anionic substances, as well as metal ions and cationic substances are removed. Then, fine particles are removed by the ultrafiltration (UF) membrane 29 to produce ultrapure water (secondary pure water) W2, which is supplied to the use point 5 through the feed pipe 30, and unused ultrapure water is recirculated to the subtank 21 through the return pipe 31.

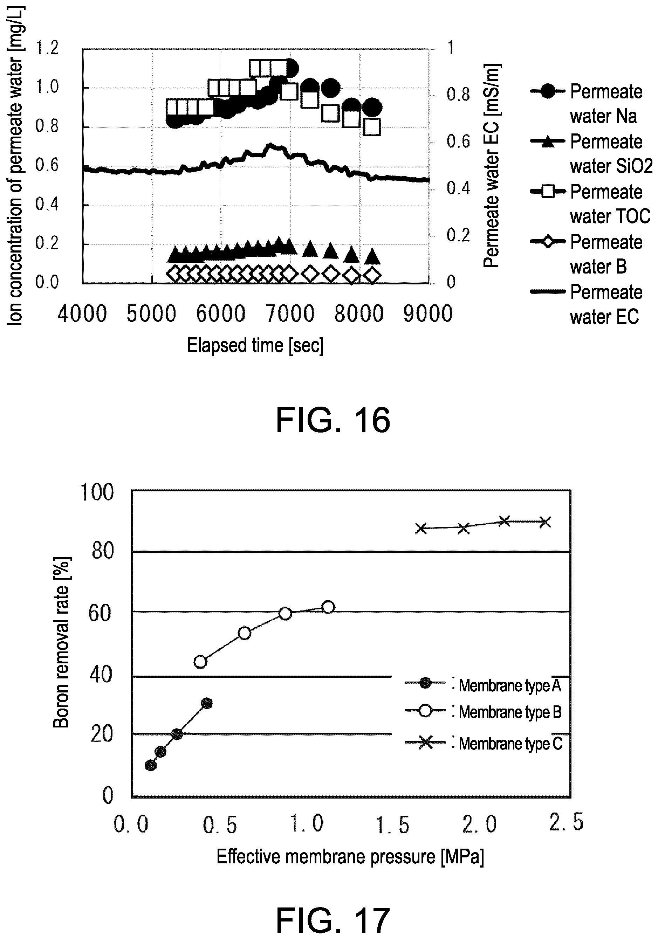

In the ultrapure water production device 1 described above, the reverse osmosis membrane constituting the reverse osmosis membrane system 12 has characteristics as shown in FIG. 17. That is, in reverse osmosis membranes, it is known that there is a correlation between the effective membrane pressure ((water supply amount + concentrated water amount)/2 - treated water) and the removal rate of various target substances for removal (in this case, boron), and that as the effective membrane pressure decreases, the removal rate of various target substances for removal tends to decrease. The optimal effective membrane pressure for removing various target substances for removal differs depending on the type of reverse osmosis membrane, but all show a tendency for the removal rate of various target substances for removal to decrease as the effective membrane pressure decreases, although the degree of this tendency varies.

Considering this characteristic, in order to consistently supply treated water with stable water quality, the reverse osmosis membrane system 12 is configured and controlled to maintain an approximately constant treated water volume. Specifically, it is designed to achieve (constant treated water volume) = (constant effective membrane pressure). However, due to long-term operation conditions, this relationship may change as a result of RO membrane fouling or degradation, necessitating adjustments in operational management.

Meanwhile, the pure water production device 41 schematically shown in FIG. 2 includes a first tank 42 for storing pre-treatment water W0, a first water supply pump 43, a reverse osmosis membrane system 44, a supply line 48A for delivering treated water WR from the reverse osmosis membrane treatment system 44 to a second tank 45, a second water supply pump 46 for supplying primary pure water W1 to a subsystem, a return line 49A for returning treated water WR from the reverse osmosis membrane treatment system 44 to the first tank 42, and a flow path 50 for concentrated water W3 from the reverse osmosis membrane treatment system 44. It is noted that 48B and 49B are automatic flow adjustment valves. In this pure water production device 41, primary pure water W1 is produced at the maximum usage amount of the use point (POU) 47 and supplied to the second tank 45, with excess water being recirculated for reuse.

### SUMMARY OF INVENTION

### Technical Problem

However, in the pure water production device 41, the first water supply pump 43 that delivers water to the reverse osmosis membrane system 44 has a constant water delivery amount (110%), thus continuously consuming a fixed amount of electricity. Even when the amount of water used at the use point (POU) 47 fluctuates within the range of 0 to 80% and water is no longer being used, the treated water WR is recycled by returning 90% to the first tank 42 through the return line 49A. It is note that the concentrated water W3 is kept constant at 20%. In recent years, efforts to reduce CO₂ emissions and improve energy efficiency have been promoted. In the pure water production device 41, it is important to reduce the operating energy of the first water supply pump 43, which supplies pre-treatment water WO to the reverse osmosis membrane system 44, as it consumes a significant amount of electricity.

Thus, it is conceivable to reduce the water delivery amount of the first water supply pump 43 at the use point (POU) 47 using an inverter or similar device, but simply reducing the water delivery amount of the first water supply pump 43 in response to the required water supply amount at the use point (POU) 47 leads to a decrease in effective membrane pressure, resulting in the problem of deterioration in the water quality of the treated water from the reverse osmosis membrane.

The present invention is made in view of the above issues, and aims to provide a pure water production device including a reverse osmosis membrane system that may maintain stable water quality even when the flow rate fluctuates in response to changes in the amount of water used, while achieving energy conservation.

### Solution to Problem

In view of the above objective, the present invention provides a pure water production device including a reverse osmosis membrane system having two or more reverse osmosis membranes arranged, in which a detection means for detecting an indicator capable of calculating an effective membrane pressure of a reverse osmosis membrane of the reverse osmosis membrane system is provided upstream or downstream of the reverse osmosis membrane system, and the pure water production device includes a control means for adjusting an effective membrane pressure by controlling a number of reverse osmosis membranes through which water passes in the reverse osmosis membrane system based on a detection value of the detection means (Invention 1).

According to this invention (Invention 1), the amount of water to be treated supplied to the reverse osmosis membrane system of the pure water production device is increased or decreased in response to the required water amount at the water supply destination (use point) of the pure water production device. To maintain stable water quality of the treated water under conditions where the flow rate of water to be treated supplied to the reverse osmosis membrane system changes, it is necessary to operate within a constant range of effective membrane pressure. When the effective membrane pressure is constant, the amount of water obtained per reverse osmosis membrane depends on the number of water passages through the reverse osmosis membranes. Thus, by detecting an indicator capable of calculating the effective membrane pressure of the reverse osmosis membranes and increasing or decreasing the number of water passages through the reverse osmosis membranes arranged in parallel so that the effective membrane pressure is within a predetermined range when the amount of water to be treated increases or decreases, the water quality may be stabilized.

In the above invention (Invention 1), it is preferable that the pure water production device has a water supply pump for supplying water to be treated to the reverse osmosis membrane system, and the control means is capable of controlling the water supply pump by an inverter (Invention 2).

According to this invention (Invention 2), by performing both inverter control of the water supply pump supplying water to be treated to the reverse osmosis membrane system and control of the number of water passages through the reverse osmosis membranes, the effective membrane pressure may be suitably maintained within a predetermined range, and the operating energy of the water supply pump may be optimized.

In addition, in the above invention (Invention 2), it is preferable to include a flow meter for detecting an amount of concentrated water from the reverse osmosis membrane system and a control valve capable of adjusting a flow rate of the concentrated water, in which the control means is capable of adjusting an opening degree of the control valve based on a detection value of a flow rate of concentrated water by the flow meter (Invention 3).

According to this invention (Invention 3), when the amount of water to be treated increases or decreases, by increasing or decreasing the number of water passages through the reverse osmosis membranes arranged in parallel and adjusting the flow rate of the concentrated water, the effective membrane pressure may be further suitably controlled to be within a predetermined range.

Furthermore, in the above inventions (Inventions 1 to 3), it is preferable that the reverse osmosis membrane system has a structure in which 2 to 6 reverse osmosis membranes are filled, or a structure consisting of a plurality of reverse osmosis membrane vessels in which 1 to 6 reverse osmosis membranes are filled (Invention 4).

According to this invention (Invention 4), the reverse osmosis membrane system may be suitably applied to either a structure where a plurality of reverse osmosis membranes are arranged in parallel or a structure where a plurality of series of reverse osmosis membrane vessels are arranged in parallel.

### Effects of Invention

According to the pure water production device of the present invention, in a pure water production device provided with a reverse osmosis membrane system having two or more reverse osmosis membranes arranged in parallel, a detection means is provided to detect an indicator capable of calculating the effective membrane pressure of the reverse osmosis membranes in the reverse osmosis membrane system, and to detect the increase or decrease in the effective membrane pressure of the reverse osmosis membrane system. Based on this detection value, the number of reverse osmosis membranes through which water passes in the reverse osmosis membrane system is controlled. Thus, when the amount of water to be treated by the reverse osmosis membrane system increases or decreases, the number of water passages through the reverse osmosis membranes may be increased or decreased so that the effective membrane pressure of the reverse osmosis membranes remains within a predetermined range, thereby stabilizing the water quality. Furthermore, the operating energy of the water supply pump may be optimized in response to the amount of water to be treated by the reverse osmosis membrane system.

### BRIEF DESCRIPTION OF DRAWINGS

[FIG. 1] is a flow diagram showing an ultrapure water production device to which the pure water device of the present invention may be applied.
[FIG. 2] is a flow diagram schematically showing the main parts of the pure water production device.
[FIG. 3] is a flow diagram schematically showing the main parts of the pure water production device according to the first embodiment of the present invention.
[FIG. 4] is a flow diagram showing an example of the operation process of the pure water production device shown in FIG. 3.
[FIG. 5] is a flow diagram showing another example of the operation process of the pure water production device shown in FIG. 3.
[FIG. 6] is a flow diagram schematically showing the pure water production device according to the second embodiment of the present invention.
[FIG. 7] is a flow diagram showing an example of the operation process of the pure water production device according to the embodiment shown in FIG. 6.
[FIG. 8] is a flow diagram showing another example of the operation process of the pure water production device according to the embodiment shown in FIG. 6.
[FIG. 9] is a flow diagram showing the reverse osmosis membrane treatment system in Example 1.
[FIG. 10] is a graph showing the change over time of the water supply pressure (effective membrane pressure) and the permeate water pressure in Example 1.
[FIG. 11] is a graph showing the change over time of the concentrated water flow rate and the permeate water flow rate in Example 1.
[FIG. 12] is a graph showing the relationship between the change in the number of reverse osmosis membranes and the water quality (electrical conductivity) of the permeate water in Example 1.
[FIG. 13] is a flow diagram showing the reverse osmosis membrane treatment system in Example 2.
[FIG. 14] is a graph showing the change over time of the water supply pressure (effective membrane pressure) and the permeate water pressure in Example 2.
[FIG. 15] is a graph showing the change over time of the concentrated water flow rate and the permeate water flow rate in Example 2.
[FIG. 16] is a graph showing the elapsed time and the water quality of the permeate water in Example 2.
[FIG. 17] is a graph showing the relationship between the effective membrane pressure of the reverse osmosis membrane and the boron removal rate.

### DESCRIPTION OF EMBODIMENTS

The following describes the pure water production device including the reverse osmosis membrane system of the present invention with reference to the drawings.

### [First embodiment]

### (Pure water production device)

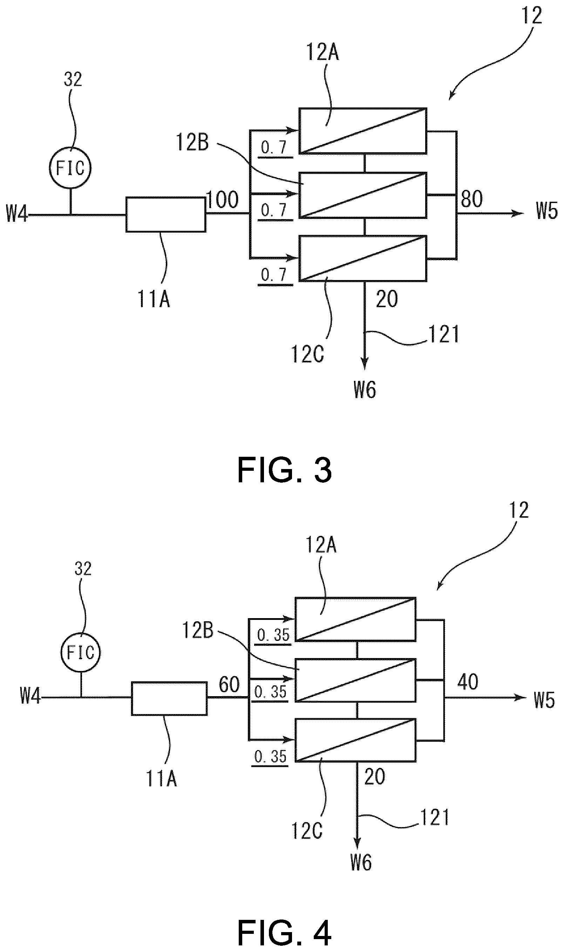

FIG. 3 schematically shows the main parts of the pure water production device including the reverse osmosis membrane system according to the first embodiment of the present invention. Since the present invention is characterized by the control of the reverse osmosis membrane system, in this embodiment, the reverse osmosis membrane system 12 is centrally illustrated. In the pure water production device shown in FIG. 3, the reverse osmosis membrane system 12 has a configuration in which three reverse osmosis membranes 12A, 12B, and 12C are arranged in parallel, and the water supply pump 11A is controlled by an unillustrated control means to supply an amount of water to be treated (pre-treatment water) W4 in response to the required amount of primary pure water W1 in the pure water production device 3. Further, a flow meter 32 for the water to be treated W4 is provided upstream of the water supply pump 11A, and based on the detection value of this flow meter 32, the control means may control the number of water passages of the reverse osmosis membranes 12A, 12B, and 12C. It is noted that 121 is the flow path for the concentrated water W6 from the reverse osmosis membranes 12A, 12B, and 12C.

### (Reverse osmosis membrane system)

In this embodiment, the reverse osmosis membrane system 12 has two or more reverse osmosis membranes arranged in parallel. This reverse osmosis membrane system 12 may be configured with reverse osmosis membranes consisting of 2 to 6 reverse osmosis membranes arranged in parallel, or it may be configured with a plurality of reverse osmosis membrane vessels arranged in parallel, each containing 1 to 6 reverse osmosis membranes. This reverse osmosis membrane system 12 is basically composed of identical reverse osmosis membranes.

There are no particular restrictions on the reverse osmosis membranes 12A, 12B, and 12C that constitute the reverse osmosis membrane system 12 as described above. Well-known reverse osmosis membrane devices in this field may be used, including various organic polymer membranes or ceramic membranes made of cellulose acetate, aliphatic polyamide, aromatic polyamide, or composites thereof. Ultra-low pressure reverse osmosis membranes, super low pressure reverse osmosis membranes, low pressure or medium pressure reverse osmosis membranes may all be applied, but low pressure reverse osmosis membranes or super low pressure reverse osmosis membranes are particularly suitable for application.

### (Control method for pure water production device including reverse osmosis membrane system)

The control method for the reverse osmosis membrane system 12 in a pure water production device including such a reverse osmosis membrane system 12 is described based on FIG. 3 to FIG. 5.

First, the basic state is shown in FIG. 3, where the water volume (water production amount) of treated water W5 is set to 80 m³/h and the concentrated water W6 from the reverse osmosis membrane system 12 is fixed at 20 m³/h. In this case, 100 m³/h of water to be treated W4 is supplied from the water supply pump 11A to each of the three reverse osmosis membranes 12A, 12B, and 12C that constitute the reverse osmosis membrane system 12. At this time, the effective membrane pressure of the reverse osmosis membranes 12A, 12B, and 12C is 0.7 MPa, and it is assumed that this effective membrane pressure exhibits a suitable ion removal rate.

Then, in the case where the required water amount (treated water W5) at the use point decreases to 40 m³/h, as shown in FIG. 4, the output of the water supply pump 11A is controlled to reduce to 60 m³/h, and this water to be treated W4 is supplied to each of the three reverse osmosis membranes 12A, 12B, and 12C that constitute the reverse osmosis membrane system 12. At this time, since the concentrated water W6 from the reverse osmosis membrane system 12 is 20 m³/h, the effective membrane pressure of the reverse osmosis membranes 12A, 12B, and 12C becomes 0.35 MPa. In this case, the water quality of the treated water W5 deteriorates due to the decrease in the effective membrane pressure of the reverse osmosis membranes 12A, 12B, and 12C.

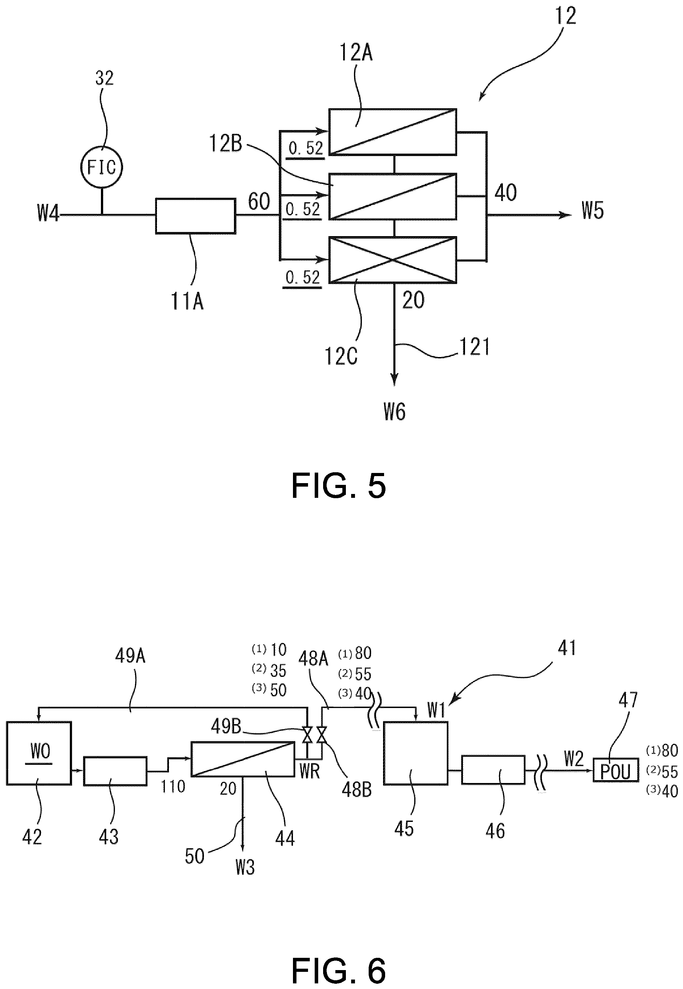

Thus, in this embodiment, in the case where the required water amount (treated water W5) at the use point decreases to 40 m³/h, as shown in FIG. 5, the water passage to one reverse osmosis membrane (reverse osmosis membrane 12C) is stopped. In this state, the output of the water supply pump 11A is controlled to reduce to 60 m³/h, and when this water to be treated W4 is supplied to the reverse osmosis membrane system 12, it is supplied to each of the reverse osmosis membranes 12A and 12B. At this time, since the concentrated water W6 from the reverse osmosis membrane system 12 is 20 m³/h, the effective membrane pressure of the reverse osmosis membranes 12A and 12B becomes 0.52 MPa. By suppressing the decrease in the effective membrane pressure of the reverse osmosis membranes 12A and 12B in this way, it is possible to prevent the deterioration of the water quality of the treated water W5.

In the control as described above, as a method for determining the switching of the number of reverse osmosis membranes, in this embodiment, the flow meter 32 for the water to be treated W4 is provided, but this is not limited thereto. It is possible to adopt a flow meter for the treated water W5, calculation of the effective membrane pressure using pressure gauges for the water to be treated W4/treated water W5/concentrated water W6, or means for measuring the water quality (electrical conductivity, TOC) of the treated water W5. Further, the timing for switching the number of membranes may be set arbitrarily according to the type of reverse osmosis membrane. Furthermore, the start-stop means may be automatic valves or water supply pumps for each series.

### [Second embodiment]

### (Pure water production device)

This embodiment basically has the same configuration as the pure water production device 41 shown in FIG. 2 described above. That is, the pure water production device 41 includes a first tank 42 for storing pre-treatment water WO, a first water supply pump 43, a reverse osmosis membrane system 44 having a plurality of reverse osmosis membranes in parallel, a supply line 48A for delivering treated water WR from the reverse osmosis membrane treatment system 44 to a second tank 45, a second water supply pump 46 for supplying primary pure water W1 to the use point 47, a return line 49A for returning the treated water WR from the reverse osmosis membrane treatment system 44 to the first tank 42, and a flow path 50 for the concentrated water W3 from the reverse osmosis membrane treatment system 44. It is noted that 48B and 49B are automatic flow adjustment valves.

### (Control method for pure water production device)

The control method for the reverse osmosis membrane system 44 in such a pure water production device 41 is described based on FIG. 6 to FIG. 8.

### (Conventional operation control method for pure water production device)

First, in the conventional control, as shown in FIG. 6, when the treated water volume (water production amount) of the reverse osmosis membrane system 44 is set to 90 m³/h and the concentrated water W3 from the reverse osmosis membrane system 44 is fixed at 20 m³/h, the first water supply pump 43 supplies 110 m³/h of pre-treatment water WO as water to be treated to the reverse osmosis membrane system 44. As a result, the water production amount of the treated water WR from the reverse osmosis membrane system 44 remains constant at 90 m³/h.

In this case, when the usage amount at the use point 47 is 80 m³/h, 80 m³/h of treated water WR is delivered to the second tank 45 through the supply line 48A, while 10 m³/h of treated water WR 10 m³/h is returned to the first tank 42 through the return line 49A (indicated as (1) in the figure).

Next, when the usage amount at the use point 47 decreases to 55 m³/h, 55 m³/h of treated water WR is delivered to the second tank 45 through the supply line 48A, while 35 m³/h is returned to the first tank 42 through the return line 49A (indicated as (2) in the figure).

Furthermore, when the usage amount at the use point 47 decreases to 40 m³/h, 40 m³/h of treated water WR is delivered to the second tank 45 through the supply line 48A, while 50 m³/h is returned to the first tank 42 through the return line 49A (indicated as (3) in the figure).

In such a conventional operation control method, as the usage amount at the use point 47 decreases, the effective membrane pressure of the reverse osmosis membrane constituting the reverse osmosis membrane system 44 decreases, raising concerns about deterioration in the water quality of the treated water WR. Moreover, the operating energy of the first water supply pump 43 becomes excessive.

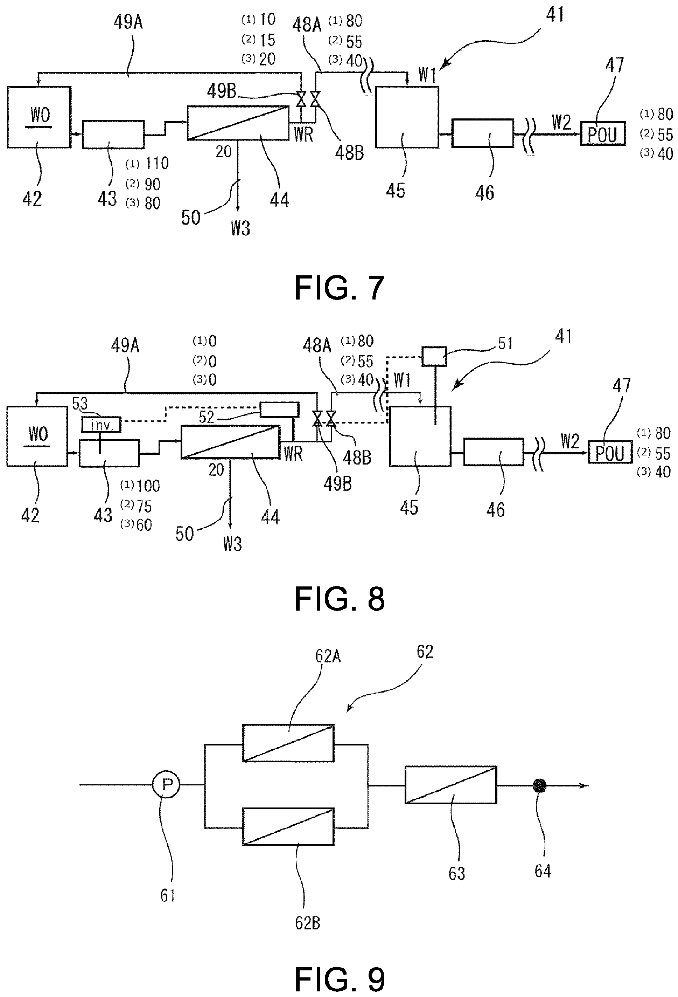

(First flow rate fluctuation operation control method for pure water production device) As shown in FIG. 7, the initial state of the first flow rate fluctuation operation control is the same as (1) in the aforementioned "basic operation control".

In other words, in the case where the treated water volume (water production amount) of the reverse osmosis membrane system 44 is set to 90 m³/h and the concentrated water W3 from the reverse osmosis membrane system 44 is fixed at 20 m³/h, 110 m³/h of water to be treated WO is supplied to the reverse osmosis membrane system 44 from the first water supply pump 43. As a result, the water production amount of treated water WR from the reverse osmosis membrane system 44 becomes 90 m³/h.

At this time, in the case where the usage amount at the use point 47 is 80 m³/h, 80 m³/h of treated water WR is delivered to the second tank 45 through the supply line 48A, while 10 m³/h is returned to the first tank 42 through the return line 49A (indicated as (1) in the figure).

Next, in the case where the usage amount at the use point 47 decreases to 55 m³/h, 90 m³/h of water to be treated WO is supplied to the reverse osmosis membrane system 44 from the first water supply pump 43. As a result, since the concentrated water from the reverse osmosis membrane system 44 is 20 m³/h, the water production amount of treated water WR becomes 75 m³/h. In this case, the number of water passages of the reverse osmosis membrane constituting the reverse osmosis membrane system is reduced as in the aforementioned first embodiment. Then, 55 m³/h of treated water WR is delivered to the second tank 45 through the supply line 48A, while 15 m³/h is returned to the first tank 42 through the return line 49A (indicated as (2) in the figure).

Furthermore, in the case where the usage amount at the use point 47 decreases to 40 m³/h, 80 m³/h of water to be treated WO is supplied to the reverse osmosis membrane system 44 from the first water supply pump 43. As a result, the water production amount of treated water WR becomes 60 m³/h. In this case, the number of water passages of the reverse osmosis membrane constituting the reverse osmosis membrane system is reduced as in the aforementioned first embodiment. Then, 40 m³/h of treated water WR is delivered to the second tank 45 through the supply line 48A, while 20 m³/h is returned to the first tank 42 through the return line 49A (indicated as (1) in the figure).

In this first flow rate fluctuation operation control method, it is possible to reduce the decrease in effective membrane pressure of the reverse osmosis membrane constituting the reverse osmosis membrane system 44 associated with the decrease in usage amount at the use point 47, thereby suppressing the deterioration of water quality of the treated water WR. However, since this control is based on increasing or decreasing the number of water passages of the reverse osmosis membrane, it results in stepwise control, making fine adjustments impossible.

(Second flow rate fluctuation operation control method for pure water production device) As shown in FIG. 8, in the second flow rate fluctuation operation control, a water level gauge 51 is provided in the second tank 45, and based on the measured value of this water level gauge, the opening degrees of the automatic flow adjustment valves 48B and 49B are controllable by a control means (not shown). Moreover, a pressure gauge 52 for measuring the pressure of the treated water WR is provided, and an inverter 53 is provided for the first water supply pump 43. Based on the measured value of this pressure gauge 52, the output of the first water supply pump 43 is controllable by inverter control.

In the initial state of this second flow rate fluctuation operation control, in the case where the usage amount at the use point 47 is 80 m³/h, 100 m³/h of water to be treated WO is supplied to the reverse osmosis membrane system 44 from the first water supply pump 43. The concentrated water from this reverse osmosis membrane system 44 is fixed at 20 m³/h. Thus, the water production amount of treated water WR from the reverse osmosis membrane system 44 becomes 80 m³/h. In this embodiment, the automatic flow adjustment valve 49B is closed, and no water is returned to the first tank 42 through the return line 49A (0 m³/h) (indicated as (1) in the figure). It is noted that the return line 49A is used as an emergency line in the case of trouble with the pure water production device or sudden changes in the water quality of the water supply.

Next, in the case where the usage amount at the use point 47 decreases to 55 m³/h, 75 m³/h of water to be treated WO is supplied to the reverse osmosis membrane system 44 from the first water supply pump 43. This sets the water production amount of the reverse osmosis membrane system 44 to 55 m³/h, and as in the first embodiment described earlier, the number of water passages of the reverse osmosis membrane constituting the reverse osmosis membrane system is reduced. Then, 55 m³/h of treated water WR is delivered to the second tank 45 through the supply line 48A. At this time, since the pressure of the treated water WR fluctuates in response to the decrease in water production amount, the change in the number of water passages of the reverse osmosis membrane, and the opening degree of the automatic flow adjustment valve 48B, this pressure is measured by the pressure gauge 52, and the first water supply pump 43 is controlled by the inverter 53 to maintain it at an almost constant level. It is noted that the automatic flow adjustment valve 49B remains closed, and no water is returned to the first tank 42 through the return line 49A (0 m³/h) (indicated as (2) in the figure).

Furthermore, in the case where the usage amount at the use point 47 decreases to 40 m³/h, 60 m³/h of water to be treated WO is supplied to the reverse osmosis membrane system 44 from the first water supply pump 43. This sets the water production amount of treated water WR to 40 m³/h, and as in the first embodiment described earlier, the number of water passages of the reverse osmosis membrane constituting the reverse osmosis membrane system is reduced. Then, 40 m³/h of treated water WR is delivered to the second tank 45 through the supply line 48A. At this time, since the pressure of the treated water WR fluctuates in response to the decrease in water production amount, the change in the number of water passages of the reverse osmosis membrane, and the opening degree of the automatic flow adjustment valve 48B, this pressure is measured by the pressure gauge 52, and the first water supply pump 43 is controlled by the inverter 53 to maintain it at an almost constant level. It is noted that the automatic flow adjustment valve 49B remains closed, and no water is returned to the first tank 42 through the return line 49A (0 m³/h) (indicated as (3) in the figure).

In this second flow rate fluctuation operation control method, it is possible to reduce the decrease in effective membrane pressure of the reverse osmosis membrane constituting the reverse osmosis membrane system 44 associated with the decrease in usage amount at the use point 47, thereby suppressing the deterioration of water quality of the treated water WR. Moreover, it is possible to fine-tune the output of the first water supply pump 43 in response to the pressure of the treated water WR from the reverse osmosis membrane system 44, thus minimizing the power of the first water supply pump 43 in response to the amount of water used at the use point 47. By combining the maintenance of effective membrane pressure of the reverse osmosis membrane and the operation control that minimizes changes in water quality in this way, more optimal operation control of the reverse osmosis membrane system 44 becomes possible.

The present invention has been described based on the aforementioned embodiments, but it is not limited to these embodiments and various modification implementations are possible. For example, there are no particular restrictions on the configuration before and after the reverse osmosis membrane system, and it may be applied to pure water production devices with various configurations of variable flow rate type.

### Examples

The present invention is described in more detail based on specific examples below, but the present invention is not limited to the following examples.

### [Example 1]

### (Test for switching the number of reverse osmosis membranes)

As shown in FIG. 9, a test device was prepared that included a reverse osmosis membrane system 62 provided with a water supply pump 61 and reverse osmosis membranes 62A and 62B, a reverse osmosis membrane 63 that treated the concentrated water from these reverse osmosis membranes 62A and 62B, and a sampling point 64 set downstream of the reverse osmosis membrane 63. In this test device, assuming fluctuations in the required water amount at the use point, the water supply pressure of the water supply pump 61 and the flow rate of permeate water (treated water) from the reverse osmosis membrane system 62 were varied, and accordingly, the water passage and stoppage to the reverse osmosis membranes 62A and 62B, and reverse osmosis membrane 63 were controlled. Specifically, a 4000-second water passage test was conducted by varying the number of water passages in the order of high flow rate: reverse osmosis membranes 62A and 62B and reverse osmosis membrane 63 (3 membranes), reverse osmosis membranes 62A and reverse osmosis membrane 63 (2 membranes), and only reverse osmosis membrane 62A (1 membrane). It is noted that the reverse osmosis membranes 62A and 62B and reverse osmosis membrane 63 were each filled with one reverse osmosis membrane in one vessel, and those that exhibit high performance at an effective membrane pressure of about 0.4 to 1.0 MPa were used.

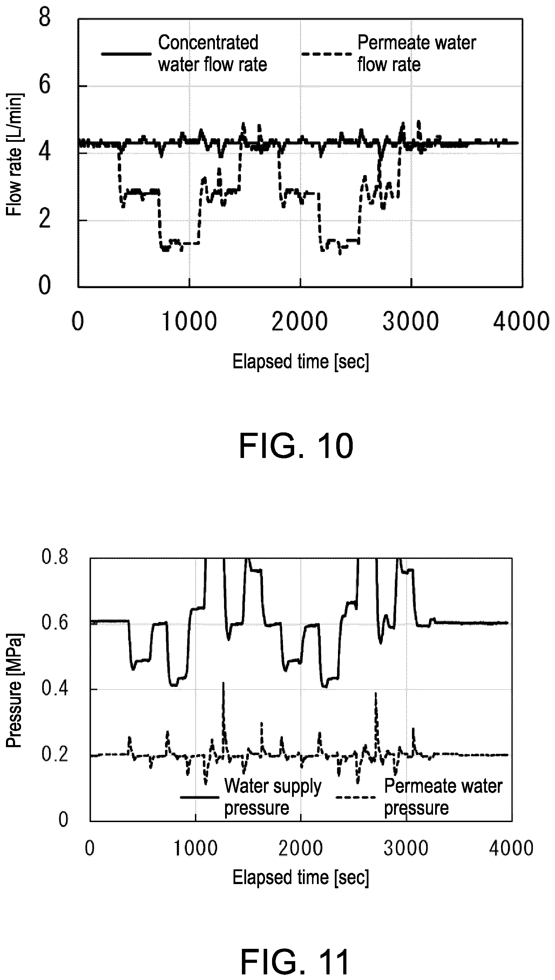

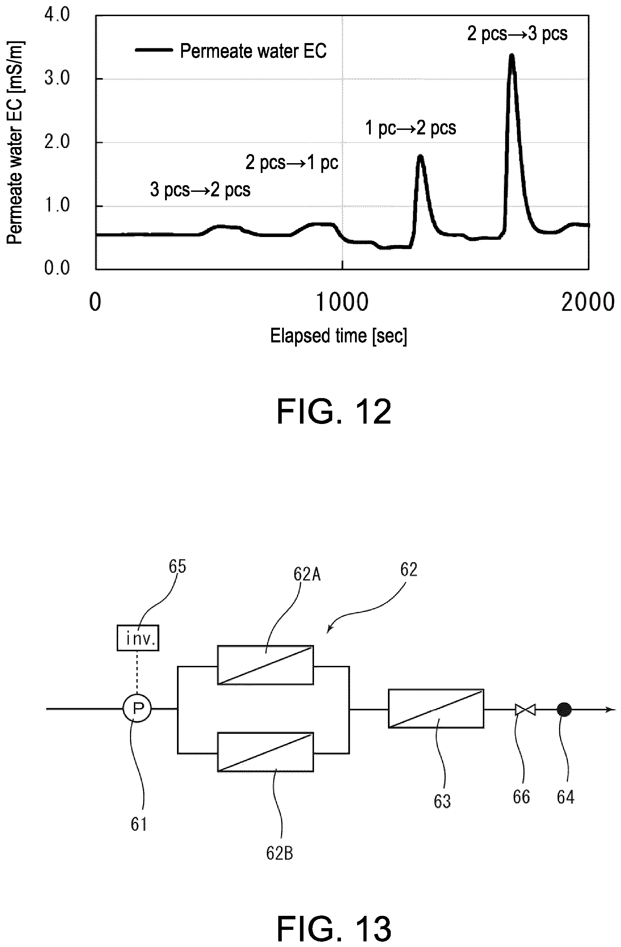

The flow rate of permeate water and the flow rate of concentrated water in this water passage test are shown in FIG. 10, the water supply pressure and permeate water pressure are shown in FIG. 11, and the result of measuring the electrical conductivity (EC) as the water quality of the permeate water from the reverse osmosis membrane system 62 is shown in FIG. 12 along with the change in the number of water passages of the reverse osmosis membranes.

As evident from FIG. 10 to FIG. 12, it can be seen that the effective membrane pressure (≒water supply pressure (in this example, the concentrated water amount is constant, and permeate water ≒ 0 MPa)) of the reverse osmosis membranes 62A and 62B and reverse osmosis membrane 63 is controllable within a range of approximately 0.8 to 0.5 MPa. Further, the electrical conductivity of the treated water (permeate water) could be maintained stably low. It is noted that there is a temporary increase when the number of reverse osmosis membranes is increased, but this is thought to be because the water quality of the water retained on the permeate water side during the water passage stoppage of the reverse osmosis membrane deteriorates, and this deteriorated retained water is released when the water passage through the reverse osmosis membrane resumes. This indicates that it is desirable to clean the membrane before resuming operation.

### [Example 2]

### (Test to confirm the effect on treated water from reverse osmosis membranes due to flow rate fluctuation)

A test device as shown in FIG. 13 was prepared. This test device was based on the device shown in FIG. 9, with an inverter 65 provided on the water supply pump 61, and a flow adjustment valve 66 provided downstream of the reverse osmosis membrane 63. The test device was controlled to maintain constant permeate water pressure and concentrated water flow rate, and the treatment was performed with the number of water passages fixed at 3.

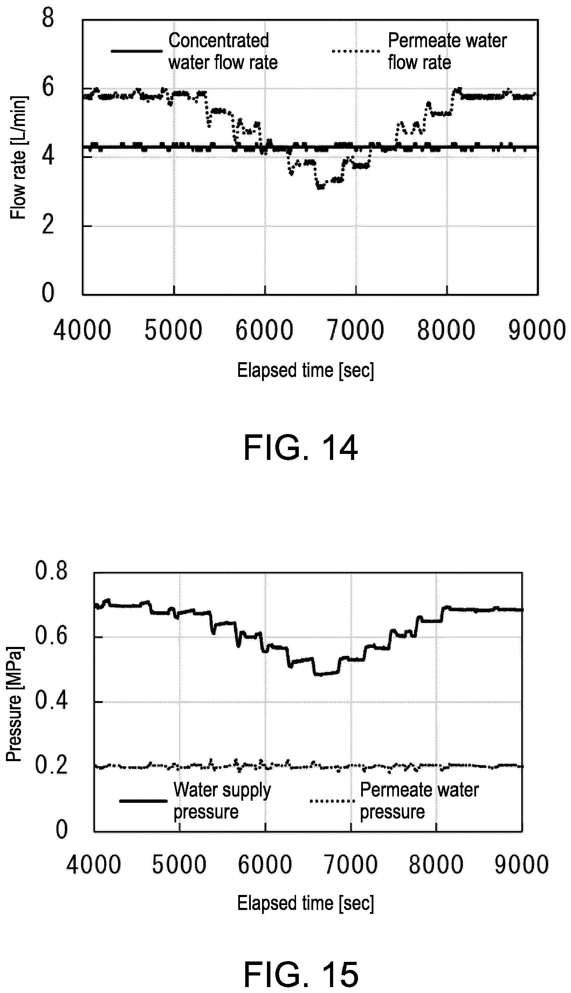

The flow rate of permeate water and the flow rate of concentrated water in this test are shown in FIG. 14, the water supply pressure and permeate water pressure are shown in FIG. 15, and the results of measuring the electrical conductivity (EC), Na concentration, SiO2 concentration, TOC concentration, and boron concentration as the water quality of the permeate water measured at the sampling point 64 are shown in FIG. 16 along with the change in the number of water passages of the reverse osmosis membranes.

As evident from FIG. 14 to FIG. 16, the water quality decreases with the reduction in permeate water flow rate and water supply pressure, indicating that the permeate water quality depends on the water supply pressure (effective membrane pressure). Thus, it can be said that by applying the control method of Example 1, operation with more stable water quality is possible.

### Reference Signs List

1 Ultrapure water production device
2 Pre-treatment device
3 Primary pure water device
4 Secondary pure water device (subsystem)
5 Use point
11 Tank
11A Water supply pump
12 Reverse osmosis membrane system
12A, 12B, 12C Reverse osmosis membrane
32 Flow meter
41 Pure water production device
42 First tank
43 First water supply pump
44 Reverse osmosis membrane system
45 Second tank
46 Second water supply pump
47 Use point
48A Supply line
48B Automatic flow adjustment valve
49A Return line
49B Automatic flow adjustment valve
50 Concentrated water flow path
51 Water level gauge
52 Pressure gauge
53 Inverter
61 Water supply pump
62 Reverse osmosis membrane system
62A, 62B, 63 Reverse osmosis membrane
64 Sampling point
65 Inverter
66 Flow adjustment valve
W Raw water
WO Pre-treatment water (water to be treated)
W1 Primary pure water
W2 Secondary pure water (ultrapure water)
W3,W6 Concentrated water
W4 Water to be treated
W5 Treated water
W6 Concentrated water
W5,WR Treated water from reverse osmosis membrane system

## Claims

1. A pure water production device comprising a reverse osmosis membrane system having two or more reverse osmosis membranes arranged, wherein
a detection means for detecting an indicator capable of calculating an effective membrane pressure of a reverse osmosis membrane of the reverse osmosis membrane system is provided upstream or downstream of the reverse osmosis membrane system, and
the pure water production device comprises a control means for adjusting an effective membrane pressure by controlling a number of reverse osmosis membranes through which water passes in the reverse osmosis membrane system based on a detection value of the detection means.

2. The pure water production device according to claim 1, wherein the pure water production device has a water supply pump for supplying water to be treated to the reverse osmosis membrane system, and the control means is capable of controlling the water supply pump by an inverter.

3. The pure water production device according to claim 2, comprising a flow meter for detecting an amount of concentrated water from the reverse osmosis membrane system and a control valve capable of adjusting a flow rate of the concentrated water, wherein the control means is capable of adjusting an opening degree of the control valve based on a detection value of a flow rate of concentrated water by the flow meter.

4. The pure water production device according to any one of claims 1 to 3, wherein the reverse osmosis membrane system has a structure in which 2 to 6 reverse osmosis membranes are filled, or a structure consisting of a plurality of reverse osmosis membrane vessels in which 1 to 6 reverse osmosis membranes are filled.
